# EUROPEAN PATENT SPECIFICATION

(11) **EP 1 612 200 B1**
(45) Date of publication and mention of the grant of the patent: **19.06.2013**
(21) Application number: 05380062.9
(22) Date of filing: 05.04.2005
(51) Int. Cl.: C05D 3/00, C05D 5/00, C05D 9/02, C05G 3/08

(54) **Fertilising composition**
Düngemittelzusammensetzung
Composition de fertilisation du sol

(30) Priority: 28.06.2004 ES 200401565
(43) Date of publication of application: 04.01.2006
(73) Proprietor: Timac Agro España, S.A., 31160 Orcoyen, Navarra (ES)
(72) Inventor: Garcia-Mina Freire, Jose Maria, 31170 Iza, Navarra (ES)
(74) Representative: Garcia-Cabrerizo y del Santo, Pedro Maria

(56) References cited:
- DE-A1- 19 601 081
- GB-A- 1 307 828
- US-A- 3 010 818
- US-A- 4 486 217
- US-A- 5 354 350
- US-A- 5 830 255
- US-A1- 2003 115 920
- CHEMICAL ABSTRACTS, vol. 112, no. 21, 1 January 1990 (1990-01-01), Columbus, Ohio, US; ALOSMANOV, M.; ASLANOV, F.; IBRAGIMOV, S.; RAMAZANOVA, Z.; GADZHIEVA, S. (AZERB. INST. NEFT KHIM., BAKU, USSR): "Manganized superphosphate" page 600 XP000151519 & KHLOPOK , (1), 15 CODEN: KHLOEO; ISSN: 0235-2567, 1990,
- DATABASE WPI Week 199022 Thomson Scientific, London, GB; AN 1990-170641 XP002554226 & SU 1 525 119 A (UKR AGRIC ACAD) 30 November 1989 (1989-11-30)
- DATABASE WPI Week 199208 Thomson Scientific, London, GB; AN 1992-062865 XP002554227 & SU 1 650 577 A (UKR AGRIC ACAD) 23 May 1991 (1991-05-23)
- CHEMICAL ABSTRACTS, vol. 131, no. 8, 5 July 1999 (1999-07-05), Columbus, Ohio, US; GOLDEN, D.C.; MING, D.W.: "Nutrient-substitued hydroxyapatites: synthesis and characterization" page 657 XP001093101 & SOIL SCIENCE SOCIETY OF AMERICA JOURNAL , 63(3), 657-664 CODEN: SSSJD4; ISSN: 0361-5995, 1999,
- LYUTSKO, V.A.; FRENKEL, P.L.; KOVALEVICH, Z.S.; MATVEEVA, V.I.: "Manufacture of trace elements fertilizer containing double superphosphate" CHEMICAL ABSTRACTS, vol. 114, no. 1, 7 January 1991 (1991-01-07), XP000188414 ISSN: 0009-2258

## Description

### FIELD OF THE INVENTION

The present invention relates to a fertiliser with high bioacceptance and a low degree of leaching or washout, the nutrient release of which is controlled by the plant by means of the organic acids it releases to the rhizosphere, and a process for the preparation thereof.

### BACKGROUND OF THE INVENTION

The indiscriminate use of fertilisers has produced the presence of high concentrations of nitrates, nitrites, phosphates and other nutrients in ground waters and springs, with the resulting risk for human and animal health, as well as for adequate preservation of the environment. This fact has caused the appearance of new laws, aimed at controlling the maximum amount of fertilising units that farmers may use per crop cycle, according to the degree of contamination present in their work area (De Clercq, P., et al. Nutrient Management Legislation in European Countries. Wagenigen Pers. Holland. 2001).

A possible solution to these problems is the use of slow-release fertilisers coated with water-insoluble membranes which slow down nutrient release according to soil moisture and temperature (Thompson et al. US 5,089,041, 1992; Zlotnikov et al. US 5,454,851, 1995). Although these products allow significantly reducing washout, volatilisation, or retrogradation losses, are not well adapted to nourishing short cycle or annual crops because the nutrient release dynamics are not suitably adapted to the dynamics associated to the crop necessities (Jiménez Gómez, S. Fertilizantes de Liberación lenta (Slow-release Fertilisers). 1992. Mundi Prensa, Madrid; p. 1).

In the case of nitrogen, nitrification and urease inhibitors have been proposed which slow down the transformation of ammonium and ureic nitrogen, respectively, in soils.

The problem with these products is that they do not control water solubility - and therefore the immediate presence of the products in the soil solution - but the nitrogen forms present in soils (ureic, ammonium or nitric forms). For this reason, although volatilisation phenomena may be controlled, other phenomena such as leaching are not controlled (Engelstad, O.P. Fertilizer Technology and Use. 1985. SSSA, Madison).

Still with regard to nitrogen, different urea polymers have been proposed, the release or assimilability of which depends on the activity of soil microorganisms. These products have been proven effective in gardening and in decorative plants, but not in industrial or intensive crops (Engelstad, O.P. Fertilizer Technology and Use. 1985. SSSA, Madison).

With regard to phosphorus (P) and binary forms P(N) or P(K), products such as natural phosphate and double phosphates of Mg and ammonium (Vilain et al. 1932. GB 377,720; Urbain, E. 1932. GB 379,434) or K(Na) and Mg(Ca) (Kerschbaum, F. 1937. GB 475,993; Franz, S. 1954. GB 704,115;), or Al(Ca) (called Phospal), have been proposed. These products are insoluble in water and may be assimilable as they are soluble in citric or formic acid under heat. However, when the solubility of these compounds in neutral ammonium citrate is studied - accepting solubility to neutral ammonium citrate as a measure of the potential degree of assimilability of a fertiliser - it is observed that their solubility is very low, therefore the potential degree of assimilability of these compounds for plants is actually low (Morel and Fardeau. Agronomical evaluation of phosphate fertilizer as a nutrient source of phosphorous for crops: isotopic procedure. Fertilizer Research 24, 115-122. 1990). In fact the K(Mg) and K(Ca) double phosphates form ceramic materials are used for isolating hazardous materials such as radioactive materials (Baldwin, Ch. et al. 1999. WO9942382).

The foregoing is consistent with the results obtained in different studies which have shown the relative inefficiency of these compounds to provide really assimilable nutrients for the plants (Morel and Fardeau. Agronomical evaluation of phosphate fertilizer as a nutrient source of phosphorous for crops: isotopic procedure. Fertilizer Research 24, 115-122. 1990).

A patent for a slow-release potassium divalent metal phosphate product has also been proposed (Moore, W. 1994. US 5,374,294), by means of reacting phosphoric acid, potassium hydroxide and a divalent metal oxide. The problem with this product is that it presents cold water solubility between 35 and 98%, due to which the washout control is very low.

CHEMICAL ABSTRACTS, vol. 112, no. 21, 1 January 1990, Columbus, Ohio, US; ALOSMANOV, M.; ASLANOV, F.; IBRAGIMOV, S.; RAMAZANOVA, Z.; GADZHIEVA, S. (AZERB. INST. NEFT KHIM., BAKU, USSR): "Manganized superphosphate", page 600, XP000151519 ; & KHLOPOK , (1), 15 CODEN: KHLOEO; ISSN: 0235-2567, 1990 discloses a superphosphate containing manganese where phosphorite (i.e. containing calcium) is reacted with sulfuric acid in the presence of manganese nitrate.

DATABASE WPI Week 199022 Thomson Scientific, London, GB; AN 1990-170641 XP002554226, & SU 1 525 119 A (UKR AGRIC ACAD) 30 November 1989 discloses zinc-magnesium phosphate fertilizer with the formula Zn₃₋ₓMgₓ(PO₄)₂.4H₂O where 0<x<1 prepared by treating a solution of zinc and magnesium chlorides with sodium phosphate.

DATABASE WPI Week 199208 Thomson Scientific, London, GB; AN 1992-062865 XP002554227, & SU 1 650 577 A (UKR AGRIC ACAD) 23 May 1991 discloses manganese-magnesium phosphate fertilizer with the formula Mn₃₋ₓMgₓ(PO₄)₂.3H₂O where 0<x<1 prepared by treating a solution of manganese and magnesium chlorides with hydrochloric acid.

In this context, the development of more efficient fertilisers that allow making adequate crop nutrition compatible with the maximum reduction of losses by washout as well as by volatilisation and retrogradation, has unquestionable interest.

The object of the present invention constitutes a solution to the problem of compatibility of nutrient loss control and adequate nutrition of annual cycle plants.

### BRIEF DESCRIPTION OF THE INVENTION

In one aspect the invention is related to a fertilising composition comprising an inorganic matrix insoluble in water but soluble in the organic acids released by the plant roots into the rhizosphere.

Another aspect of the invention is a method for preparing the fertilising composition.

A further aspect of the invention is a method for soil fertilisation that allows making adequate crop nutrition compatible with the maximum reduction of fertiliser losses.

### DESCRIPTION OF THE DRAWINGS

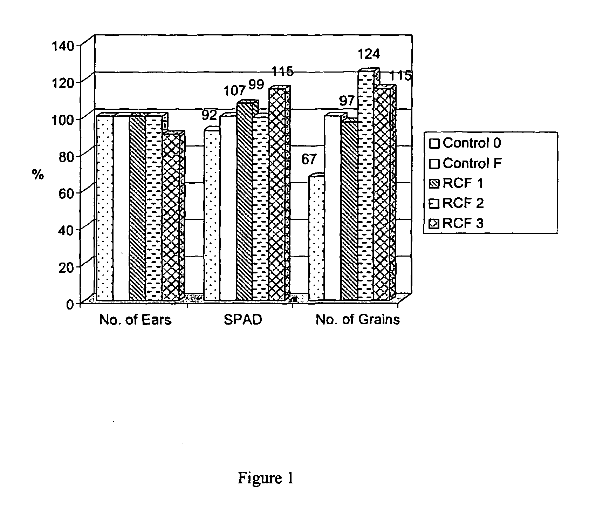

Figure 1 shows the effect of the RCF components and the traditional fertiliser (F) on the chlorophyll content SPAD index, ear number and grain number.

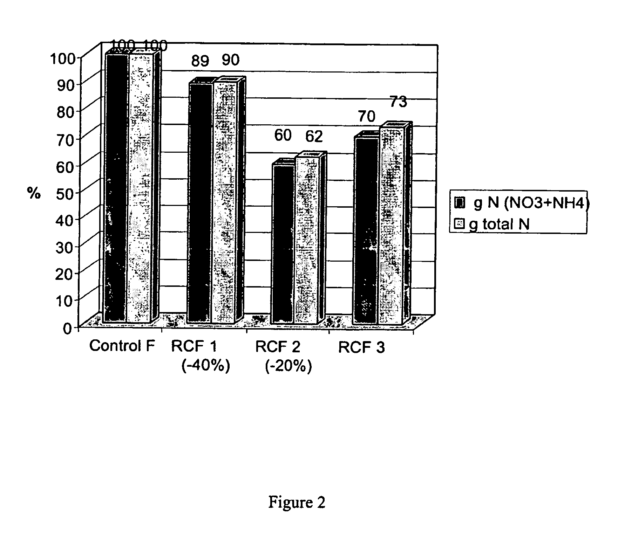

Figure 2 shows the effect of the RCF compositions and traditional fertiliser (F) on leached nitrogen percentage expressed as a percentage with respect to the control (F).

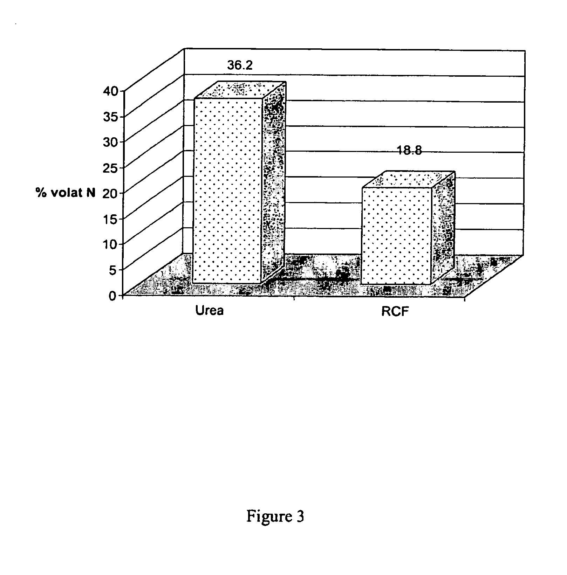

Figure 3 shows the effect of the RCF formulation manufactured according to Example 2 on the degree of losses by volatilisation.

### DETAILED DESCRIPTION OF THE INVENTION

The present invention provides a fertilising composition comprising an inorganic matrix insoluble in water but soluble in the organic acids released by the plant roots into the rhizosphere.

An important feature of this invention is that the progressive solubility of the product is controlled by the plant by means of the molecular signals that it emits to the rhizosphere in response to the nutrient needs.

These signals are summarised in (Pinton et al. The Rhizosphere. Marcel Dekker. 2001):
- Low molecular weight organic acids with high complexing ability.
- pH acidification
- Multiplication of microbiota activity

The fertilising composition of the invention therefore comprises an inorganic matrix insoluble in water but soluble in the organic acids released by the plant roots into the rhizosphere, wherein said matrix comprises one or several double phosphorus salts with calcium or magnesium, and one of the metals chosen from Fe, Al, Mn, Cu, Zn, B and Co, with the condition that Al is chosen only when the other double salt element is Mg.

the fertilising composition of the invention further comprises an initiating fraction, made up of water soluble salts of one or several elements chosen from Ca, Mg, Fe, Al, Mn, Cu, Zn, B and Co. The water soluble salts can be, for example, simple sulphates and/or phosphates of one or several elements chosen from Ca, Mg, Fe, Al, Mn, Cu, Zn, B and Co.

the double salts forming part of the matrix insoluble in water but soluble in the organic acids released by the plant roots into the rhizosphere are chemically associated to organic compounds with chelating ability by means of metal bridges.

The organic compounds with chelating ability are preferably chosen from the group formed by humic acids, fulvic acids, lignin, lignosulphonates, synthetic chelating agents, low molecular weight carboxylic acids and mixtures thereof, as well as organic substrates containing compounds with chelating ability such as peat, compost, fresh plant residues.

In a particular embodiment, the low molecular weight carboxylic acids are chosen from citric acid and oxalic acid and the phytoregulators and pesticides are chosen from the group formed by those of natural origin and those which are synthetic.

In another particular embodiment the synthetic chelating agent is EDTA.

In a preferred embodiment the chelating agent is humic acid.

In a preferred embodiment, the fertilising composition further comprises one or several nutrients chosen from nitrogen and potassium sources and sources of organic matter, nitrification or urea hydrolysis inhibitors, phytoregulators and pesticides, which are integrated or encapsulated in the water insoluble matrix and the release of which is associated to the release of the elements of the matrix.

Preferably, the phytoregulators are chosen from the group formed by cytokinins, gibberellins, salicylates, polyamines and brassinosteroids, and the pesticide is chosen from the group formed by nematicides, insecticides and bactericides. These can be of natural origin (for example, marine algae extracts, plant material compost, etc.) or synthesised.

The pesticides may be chosen from one or more fungicides, nematicides, insecticides, bactericides, etc., both of natural origin (for example, plant extracts, essential oils, etc.) or synthesised.

According to a particular embodiment the potassium source is a potassium salt and the nitrogen source is ammonium, nitrate, urea or an organic nitrogen source different to urea, such as heterocyclic compounds, proteins, peptides or urea polymers, such as urea formaldehyde.

More preferably, the potassium salt is potassium chloride.

According to a particular embodiment the fertilising composition contains double salts of phosphorus, calcium, iron and/or phosphorus, calcium, zinc.

According to another particular embodiment the fertilising composition contains two double salts, one of phosphorus, magnesium and iron and another one of phosphorus, magnesium and zinc.

The fertilising compositions may be presented in powder, granulated, pellet or compacted form.

In the fertilising formulation object of the invention two complementary fractions may then be integrated:
- Initiating fraction made up of the water soluble nutrient fraction which allows beginning the functional activity of the root and of the plant itself. This fraction forms between 10% and 30% of the total.
- Stable fraction called RCF (Rhizosphere-Controlled Fertiliser) made up of by the matrix of the water insoluble nutrient fraction but which is gradually made soluble by the action of the organic acids released by the plant roots into the rhizosphere.

As the inorganic matrix becomes soluble, the release of the rest of the nutrients optionally integrated therein is also allowed.

The preparation method comprises the step of preparing an inorganic matrix insoluble in water but soluble in the organic acids released by the plant roots into the rhizosphere, simultaneously reacting:
a. One or several acids chosen from phosphoric acid, phosphorous acid, pyrophosphoric acid, polyphosphoric acid, sulphuric acid and mixtures thereof,
b. One or several Ca and/or Mg compounds chosen from oxide, hydroxide, carbonate, phosphate, silicate, sulphate, chloride and nitrate.
c. One or several compounds containing one or several of the following elements: Fe, Al (only when the other element of the salt is Mg), Cu, Mn, Zn, B and Co, chosen from oxide, hydroxide, carbonate, phosphate, silicate, sulphate, chloride and nitrate.

sulphuric acid can be used as the only attacking acid and phosphates are used as Ca or Mg and P sources.

the phosphoric, phosphorous, pyrophosphoric, polyphosphoric, sulphuric acids or mixtures thereof are optionally mixed, either previously or in the reaction medium, with organic substances or compounds with complexing or chelating ability.

the organic substances or compounds with complexing or chelating ability are chosen from the group of humic acids; fulvic acids; organic materials containing compounds with chelating ability such as peat, compost, fresh plant residues; lignin; lignosulphates; synthetic chelating agents such as EDTA and low molecular weight carboxylic acids such as citric acid or oxalic acid.

Organophosphates are thus obtained, in which the organic compound with chelating ability is chemically associated with the phosphorus nucleus by means of bridges formed by the metal.

In the preparation method the granulometry of the solid components is not a determining factor, but is preferably under 200 microns.

In a preferred embodiment, water soluble salts of one or several of the elements chosen from Ca, Mg, Al, Mn, Cu, Zn, B and Co are formed as reaction byproducts, forming the initiating fraction comprised in the fertilising composition. The soluble salts may be, for example, simple phosphates and/or sulphates of one or several of the elements chosen from Ca, Mg, Fe, Al, Mn, Cu, Zn, B and Co.

The water soluble salts can be formed in variable proportions, depending on the reaction conditions, particularly on the proportion between the acids used and the compounds providing the elements Ca, Mg, Fe, Al, Mn, Cu, Zn, B and Co. Therefore, the ratio of acids:compounds containing Ca, Mg, Fe, Al, Mn, Cu, Zn, B and Co is greater than the stoichiometric ratio.

the ratio of acids:compounds containing Ca, Mg, Fe, Al, Mn, Cu, Zn, B and Co can be less than the stoichiometric ratio.

one or several components chosen from: nitrogen and potassium sources, organic matter sources, nitrification or urea hydrolysis inhibitors, phytoregulators and/or pesticides are additionally introduced in the inorganic matrix insoluble in water but soluble in the organic acids released by the plant roots into the rhizosphere. These optional fertilising composition components can be incorporated during the preparation process by means of mixing and granulating these substances with the previously obtained matrix.

The reaction for obtaining the inorganic matrix insoluble in water but soluble in the organic acids released by the plant roots into the rhizosphere can be performed in any type of mixer-reactor that allows mixing liquid and solid components, for example, a Lodige mixer, a blade or helix mixer, Kuhlman reactor, etc.

The temperature at which the liquid components are added is not a determining factor, but it is preferably between 20°C and 50°C.

The process can be performed in a continuous or discontinuous manner, the optimal reaction time being 15 minutes.

The reaction can be carried out:
1. Simultaneously adding the different components to the reactor.
2. Premixing - which may include grinding - the solid components, after mixing - reacting with the liquid components.
3. The liquid components may be premixed with the solid components before the reaction.

Working temperature and pressure are not determining factors, therefore, it is possible to conduct the reaction at room temperature and atmospheric pressure, which forms a practical advantage of this process.

The optional incorporation of other nutrients, such as nitrogen and potassium sources, organic matter sources, nitrification or urea hydrolysis inhibitors, phytoregulators and/or pesticides, to the fertilising composition is carried out by mixing the different matters and granulation, either by means of the technique of granulating drum in solid-liquid phase and subsequent drying, or by extrusion or compaction.

Another aspect of the invention is formed by a soil fertilisation method which allows making adequate crop nutrition compatible with the maximum reduction of fertilisation losses, comprising applying a composition of the invention to the soil.

Included below are non-limiting examples of some embodiments of the invention.

### Example 1

### Obtaining a matrix comprising a mixture of double salts of P (Mg)(Fe) and P(Mg)(Zn)

To obtain approximately 1.5 kg of a mixture of double salts of P(Mg)(Fe) and P(Mg)(Zn) according to the present invention, the following was carried out.
1. 989.4 g of phosphoric acid (68%) are reacted with 500 g of magnesium oxide, 103.7 g of iron carbonate and 96 g of zinc carbonate by means of mixing.
   The reaction is carried out by means of simultaneous mixing of the components in a Kuhlman-type reactor. The product is set in 15 minutes.
   The solid products have been previously ground until 90% are under 100 µm.
2. The product is left to cure for 24 h.

The typical analysis of the obtained product is shown in Table 1.

**Table 1. Typical analysis of a basic RCF product, obtained by means of reacting phosphoric acid with Mg oxides and Zn and Fe carbonates.**

| **Parameters (%)** | **RCF** |
|---|---|
| Fe - Total (as Fe) | 3.1 |
| Fe - citrate (as Fe) | 1.6 |
| Fe - water (as Fe) | 0.002 |
| P - total (as P₂O₅) | 34.5 |
| P - citrate (as P₂O₅) | 34 |
| P - water (as P₂O₅) | 14 |
| Mg - total (as MgO) | 24.2 |
| Mg - citrate (as MgO) | 24.2 |
| Mg - water (as MgO) | 3.7 |
| Zn - total | 3.8 |
| Zn - citrate (as Zn) | 3.7 |
| Zn - water (as Zn) | 0.02 |

| | |
|---|---|
| Water: soluble in water | |
| Citrate: soluble in neutral ammonium citrate | |
| Total: soluble in concentrated hydrochloric acid. | |

Solubility in neutral ammonium citrate is taken as a measurement of the fertiliser solubility in the organic acids released by the plant roots into the rhizosphere and therefore as an indicator of their potential degree of assimilability.

### Example 2

### Obtaining a complete fertiliser from a matrix comprising a mixture of double salts of P(Mg)(Fe) and P(Mg)(Zn)

1. The following are mixed in a Lodige mixer:
   - 312.5 g of the matrix comprising a mixture of double salts of P(Mg)(Fe) and P(Mg)(Zn) obtained in Example 1.
   - 200 g of potassium chloride
   - 119 g of ammonium sulphate
   - 10.87 g of urea
   - 26.51 g of melamine
   - 15 g of grape marc compost
   - 25 g of soluble solid extract of a marine algae of the *ascophyllum* family
   - 0.1 g of benzylaminopurine
   - 0.01 g Folpet
   - 150 g of water vapour
   The solid products have been previously ground until 90% are under 100 µm.
2. The product from 1 is granulated in a granulating drum by adding water vapour
3. The product from 2 is dried in a drying drum using counterflow hot air at 300°C.

A typical mineral analysis of the product obtained from Example 2 is shown in Table 2.

**Table 2**

| **Parameters** | **Units** | **Values** |
|---|---|---|
| Ph | - | 6.9 |
| Electric conductivity | mS/cm | |
| Moisture | % | 1.1 |

| **Macroelements** | | |
|---|---|---|
| N - total (Dumas) | % | 27.3 |
| N - ammonium | % | 3.7 |
| P - total (as P₂O₅) | % | 10 |
| P - citrate (as P₂O₅) | % | 9.3 |
| P - water (as P₂O₅) | % | 5.6 |
| Mg - total (as MgO) | % | 7.1 |
| Mg - citrate (as MgO) | % | 6.6 |
| Mg - water (as MgO) | % | 2.2 |
| Sodium (as Na) | % | |

| **Trace Elements** | | |
|---|---|---|
| Iron - total | % | 0.85 |
| Iron - citrate | % | 0.3 |
| Iron - water | % | 0 |
| Zinc - total | % | 1.1 |
| Zinc - citrate | % | 1.1 |
| Zinc - water | % | 0.028 |
| K - total (as K₂O) | % | 11.8 |
| K - citrate (as K₂O) | % | 11.7 |
| K - water (as K₂O) | % | 10.9 |

| | | |
|---|---|---|
| Water: soluble in water | | |
| Citrate: soluble in neutral ammonium citrate | | |
| Total: soluble in concentrated hydrochloric acid | | |
| Iron and zinc are expressed as iron and as zinc. | | |

### Example 3

### Obtaining a matrix comprising a mixture of double salts of P(Mg)(Fe)(humic acid) and P(Mg)(Zn)(humic acid)

To obtain 1.5 kg of the matrix comprising a mixture of double salts of P(Mg)(Fe)(humic acid) and P(Mg)(Zn)(humic acid) according to the invention, the following was carried out.
1. 989.4 g of phosphoric acid (68%) and 200 g of a humic acid previously mixed with stirring are reacted with 500 g of magnesium oxide, 103.7 g of iron carbonate and 96 g of zinc carbonate by means of mixing.
   The reaction is carried out by means of simultaneous mixing of the components in a Kuhlman-type reactor. The product is set in 15 minutes.
   The solid products have been previously ground until 90% are under 100 µm.
2. The product is left to cure for 24 h.

### Example 4

### Obtaining a matrix comprising a double salt of P(Ca)(Fe)(humic acid)

To obtain about 2.8 kg of a matrix comprising a double salt of P(Ca)(Fe)(humic acid) according to the invention, the following was carried out. 1. 600 g of sulphuric acid (70%), 300 g of phosphoric acid (68%) and 200 g of humic acid (25%) are reacted with 1200 g of phosphoric rock (apatite tricalcium phosphate of 32% P2O5), 1,000 g of iron sulphate heptahydrate (24% total Fe). The reaction is carried out by means of simultaneous mixing of the components in a Kuhlman-type reactor. The product is set in 15 minutes. The solid products have been previously ground until 90% are under 100 m.

### Example 5

### Effect of the RCF composition obtained in the composition from Example 2 on the development of wheat plants grown in limestone soil, nitrogen losses by leaching and nitrogen losses by volatilisation

This study was carried out in the R&D Department of Inabonos SA (San Francisco, S., Urrutia, O., Casanova, E., Zamarreo. A. M^{a} and Garcia-Mina, J. M^{a}. 2003)

### Methodology

Short cycle wheat seeds (Farak) grown in 6.6 litre pots with perforated bases were used to determine also the leaching with respect to irrigation. Once germinated, 7 seedlings were left in each pot for the purpose of reproducing the usual sowing density (450 seeds per m²).
The soil used came from Iza (Navarra) and was mixed with 50% siliceous sand to facilitate draining.
The basic chemical analysis of the soil was: pH 8.08, EC 0.66 mS cm², OM 0.66% and carbonate content was 53.84%. P content was also very low (9.47 ppm), as well as the assimilable micronutrient content: 6.6 ppm Fe; 0.57 ppm Cu; 7 ppm Zn and 0.43 ppm Mn.

The following treatments were used:
- Control 0: did not receive fertilisation.
- Control F: consisting in the traditional fertilisation on the surface at tillage corresponding to 350 kg/Ha of 8-15-15 and 330 kg/Ha of urea to the (180 nitrogen units; 52.5 P₂O₅ units; 52.5 K₂O units) (harvest predicted between 5,000 and 6,000 kg/Ha).
- RCF 1: consisting in the deep application at seeding of 650 kg/Ha of 18-9-12 MgO Oligo RCF (117 nitrogen units; 58.5 P2O5 units; 78 K₂O units).
- RCF 2: consisting in the deep application at seeding of 830 kg/Ha of 18-9-12 MgO Oligo RCF (149 nitrogen units; 74.7 P2O5 units; 99.6 K₂O units).
- RCF 3: consisting in the deep application at seeding of 1.000 kg/Ha of 18-9-12 MgO Oligo RCF (180 nitrogen units; 90 P₂O₅ units; 120 K₂O units).
The expression MgO Oligo means that the fertiliser also contains 2% Mg and 0. 1 % Fe and Zn.
RCF means that the fertiliser corresponds to the fertilisers of this invention (rhizosphere-controlled fertiliser).
If the necessity of 23 kg of N per ton of grain is considered, the extraction of a production of 5,500 kg/Ha would be of 126 kg N/Ha.
Thus, unit quantities with the RCF 1 treatment are obtained which correspond to those extracted by the crop, and which correspond to 35% less nitrogenous units compared to the control treatment corresponding to the traditional fertiliser. However with the RCF 2 and RCF 3 treatments a 27% reduction in nitrogen units and the same nitrogenous fertilisation with respect to the control containing the traditional fertiliser would be obtained.
The products were manufactured as described in Example 2.
The leaching was collected weekly corresponding with irrigation. Nitrogen content and forms in the leaching were evaluated.
Two harvests were performed, one after 30 days and another one after 60 days at the beginning of grain maturation.
The dry weight of root and aerial part, ear number and grain number - all expressed by pot - as well as the mineral nutrient content, were evaluated.

## Claims

1. A fertilising composition, comprising:
• an inorganic matrix insoluble in water but soluble in the organic acids released by the plant roots into the rhizosphere, wherein said matrix comprises one or several double salts of phosphorus with calcium or magnesium, and one of the metals chosen from Fe, Al, Mn, Cu, Zn, B and Co, with the condition that Al is chosen only when the other element of the double salt is Mg and said double salts are chemically associated to organic compounds with chelating ability by means of metal bridges;
• a water soluble fraction formed by water soluble salts of one or several of the elements chosen from Ca, Mg, Fe, Al, Mn, Cu, Zn, B and Co, wherein the water soluble salts are simple sulphates and/or phosphates of one or several of the elements chosen from Ca, Mg, Fe, Al, Mn, Cu, Zn, B and Co and wherein the fraction of the water soluble salts is between 10% and 30% of the total

2. A fertilising composition according to claim 1 **characterised in that** it further comprises other nutrients chosen from nitrogen and potassium sources, organic matter sources, nitrification or urea hydrolysis inhibitors, phytoregulators and pesticides, which are integrated or encapsulated in the water insoluble matrix and the release of which is associated to the release of the elements of the matrix.

3. A fertilising composition according to claim 1, **characterised in that** the organic compounds with chelating ability are chosen from the group formed by humic acids, fulvic acids, lignin, lignosulphonates, synthesis chelating agents, low molecular weight carboxylic acids and mixtures thereof, as well as organic substrates containing compounds with chelating ability such as peat, compost, fresh plant residues.

4. A fertilising composition according to claim 2 and 3, **characterised in that** the low molecular weight carboxylic acids are chosen from citric acid and oxalic acid, and the phytoregulators and pesticides are chosen from the group formed by those of natural origin and those which are synthetic.

5. A fertilising composition according to claim 3, **characterised in that** the synthesis chelating agent is EDTA.

6. A fertilising composition according to claim 3, **characterised in that** the chelating agent is a humic acid.

7. A fertilising composition according to claim 2, **characterised in that** the phytoregulators are chosen from the group formed by cytokinins, gibberellins, salicylates, polyamines and brassinosteroids, and the pesticide is chosen from the group formed by nematicides, insecticides and bactericides.

8. A fertilising composition according to claim 2, **characterised in that** the potassium source is a potassium salt and the nitrogen source is ammonium, nitrate, urea or an organic nitrogen source different to urea, such as heterocyclic compounds, proteins, peptides or urea polymers, such as urea formaldehyde.

9. A fertilising composition according to claim 8, **characterised in that** the potassium salt is potassium chloride.

10. A fertilising composition according to claims 1 to 9, **characterised in that** the double salts are of phosphorus, calcium, Fe and/or phosphorus, calcium, Zn.

11. A fertilising composition according to claims 1 to 9, **characterised in that** it contains two double salts. One of phosphorus, magnesium and Fe; and another of phosphorus, magnesium and Zn.

12. A fertilising composition according to previous claims, **characterised in that** it is presented in powder, granulated, pellet or compacted form.

13. The method for fertilising soil which allows making adequate crop nutrition compatible with the maximum reduction of fertiliser losses, comprising the application to the soil of a composition according claims 1 to 12.

## Patentansprüche

1. Eine Düngungs-Zusammensetzung umfasst:
• Eine anorganische wasserunlösliche Matrix, die aber löslich in den organischen Säuren ist, die durch die Pflanzenwurzeln in die Rhizosphäre freigesetzt werden, wobei die Matrix ein oder mehrere Doppelsalze von Phosphor mit Calcium oder Magnesium entspricht und eines der Metalle aus Fe, Al, Mn, Cu, Zn, B und Co ausgewählt mit der Bedingung, dass Al wird nur dann ausgewählt, wenn das andere Element des Doppelsalzes Mg ist und die Doppelsalze chemisch an organischen Verbindungen mit Chelatisierungsfähigkeit durch Metallbrücken zugeordnet sind.
• Eine wasserlösliche Fraktion gebildet durch wasserlösliche Salze von einem oder mehreren der Elemente aus from Ca, Mg, Fe, Al, Mn, Cu, Zn, B und Co ausgewählt, wobei den wasserlöslichen Salzen einfache Sulfate sind und/oder Phosphate eines oder mehrerer der Elemente aus Ca, Mg, Fe, Al, Mn, Cu, Zn, B und Co ausgewählt und wobei der Anteil an den wasserlöslichen Salzen zwischen 10% und 30% des Gesamtgewichts liegt.

2. Eine Düngungs-Zusammensetzung nach Anspruch 1 wird **dadurch gekennzeichnet, dass** es andere Nährstoffe aus Stickstoff- und Kaliumquellen enthällt, organische Stoff-Quellen, Nitrifikation oder Harnstoff Hydrolyseschutzmittel, Phytoregulatoren und Pestizide, welche integriert oder in der wasserunlöslichen Matrix eingekapselt sind und deren Freisetzung an die Freisetzung der Elemente der Matrix zugeordnet sind.

3. Eine Düngungs-Zusammensetzung nach Anspruch 1 wird **dadurch gekennzeichnet, dass** die organischen Verbindungen mit Chelatisierungsfähigkeit werden vorzugsweise aus der Gruppe von Huminsäure, Fulvinsäuren, Lignin, Lignosulfonaten, synthetischen Komplexbildner, niedermolekulare Carbonsäuren und deren Gemischen ausgewählt, sowie organische Substrate, die Verbindungen mit Chelatisierungsfähigkeit enthalten wie Torf, Kompost, frische Pflanzenreste.

4. Eine Düngungs-Zusammensetzung nach Anspruch 2 und 3 wird **dadurch gekennzeichnet, dass** die niedermolekularen Carbonsäuren aus Zitronensäure und Oxalsäure gewählt werden, und die Phytoregulatoren und Pestiziden werden aus der Gruppe, die aus natürlicher Herkunft und die synthetisch sind, ausgewählt.

5. Eine Düngungs-Zusammensetzung nach Anspruch 3 wird **dadurch gekennzeichnet, dass** die Synthese Chelatbildner EOTA ist.

6. Eine Düngungs-Zusammensetzung nach Anspruch 3 wird **dadurch gekennzeichnet, dass** das chelatbildende Mittel eine Huminsäure ist.

7. Eine Düngungs-Zusammensetzung nach Anspruch 2 wird **dadurch gekennzeichnet, dass** die Phytoregulatoren aus der Gruppe der Cytokininen, Gibberelline, Salicylate, Polyamine und Brassinosteroide ausgewählt sind, und das Pestizid aus der Gruppe der Nematiziden, Insektiziden und Bakteriziden ausgewählt ist.

8. Eine Düngungs-Zusammensetzung nach Anspruch 2 wird **dadurch gekennzeichnet, dass** die Kaliumquelle ein Kaliumsalz ist und die Stickstoffquelle Ammonium, Nitrat, Harnstoff oder eine organische Stickstoffquelle verschieden von Harnstoff ist, wie heterocyclischen Verbindungen, Proteine, Peptide oder Harnstoff-Polymere, wie z. B. Harnstoff-Formaldehyd.

9. Eine Düngungs-Zusammensetzung nach Anspruch 8 wird **dadurch gekennzeichnet, dass** das Kaliumsalz Kaliumchlorid ist.

10. Eine Düngungs-Zusammensetzung nach den Ansprüchen 1 bis 9 wird **dadurch gekennzeichnet, dass** die Doppelsalze Phosphor, Kalzium, Eisen und/oder Phosphor, Calcium, Zink sind.

11. Eine Düngungs-Zusammensetzung nach den Ansprüchen 1 bis 9 wird **dadurch gekennzeichnet, dass** sie zwei Doppel-Salze enthält. Eines aus Phosphor, Magnesium und Eisen, und ein anderer aus Phosphor, Magnesium und Zink.

12. Eine Düngungs-Zusammensetzung nach den vorherigen Ansprüchen wird **dadurch gekennzeichnet, dass** sie in Pulverform, granuliert, Perlen oder kompaktierter Form vorgelegt sind.

13. Die Düngungsmethode der Erde, die eine geeignete Pflanzenernährung kompatibel mit der maximale Reduzierung von Düngerverluste ermöglicht, ist die Anwendung auf den Boden einer Zusammensetzung nach Ansprüchen 1 bis 12 umfasst.

## Revendications

1. Composition fertilisante, qui comprend :
• une matrice organique insoluble dans l'eau, mais soluble en les acides organiques libérés par les racines de la plante dans la rhizosphère, dans laquelle ladite matrice comprend un ou plusieurs sels doubles de phosphore avec du calcium ou magnésium, et un des métaux choisis parmi le Fe, Al, Mn, Cu, Zn, B et le Co, à la condition que l'Al ne soit choisi que quand l'autre élément du sel double soit Mg et lesdits sels doubles soient chimiquement associés à des composés organiques à pouvoir chélatant au moyen de ponts métalliques;
• une fraction soluble dans l'eau formée par des sels solubles dans l'eau d'un ou plusieurs des éléments choisis parmi le Ca, Mg, Fe, Al, Mn, Cu, Zn, B et le Co, dans laquelle les sels solubles dans l'eau sont des sulfates et/ou phosphates simples d'un ou plusieurs des éléments choisis parmi le Ca, Mg, Fe, Al, Mn, Cu, Zn, B et le Co et dans laquelle la fraction de sels solubles dans l'eau est comprise entre un 10% et un 30% du total

2. Composition fertilisante selon la revendication 1 **caractérisée en ce qu'**elle comprend aussi d'autres nutriments choisis parmi des sources d'azote et potassium, sources de matière organique, inhibiteurs de nitrification ou hydrolyse d'urée, phytorégulateurs et pesticides, qui sont intégrés ou encapsulés dans la matrice insoluble dans l'eau et dont la libération est associée à la libération des éléments de la matrice.

3. Composition fertilisante selon la revendication 1, **caractérisée en ce que** les composés organiques à pouvoir chélatant son choisis parmi le groupe formé par des acides humiques, des acides fulviques, de la lignine, des lignosulfonates, des agents chélatants synthétiques, des acides carboxyliques à faible poids moléculaire et leurs combinassions, ainsi que des substrats organiques contenant des composés à pouvoir chélatant tels que la tourbe, le compost et les résidus frais de plantes.

4. Composition fertilisante selon la revendication 2 et 3, **caractérisée en ce que** les acides carboxyliques à faible poids moléculaire sont choisis d'entre l'acide citrique et l'acide oxalique, et les phytorégulateurs et pesticides sont choisis du groupe formé par ceux d'origine naturelle et ceux qui sont synthétiques.

5. Composition fertilisante selon la revendication 3, **caractérisée en ce que** l'agent chélatant synthétique est EDTA.

6. Composition fertilisante selon la revendication 3, **caractérisée en ce que** l'agent chélatant est un acide humique.

7. Composition fertilisante selon la revendication 2, **caractérisée en ce que** les phytorégulateurs sont choisis du groupe formé par des cytokinines, gibbérellines, salicylates, polyamines et brassinostéroïdes, et le pesticide est choisi du groupe formé par des nématicides, insecticides et bactéricides.

8. Composition fertilisante selon la revendication 2, **caractérisée en ce que** la source de potassium est un sel de potassium et la source d'azote est de l'ammonium, du nitrate, de l'urée ou une autre source organique d'azote différente à l'urée, tel que des composés hétérocycliques, protéines, peptides ou polymères d'urée, tels que l'urée formaldéhyde.

9. Composition fertilisante selon la revendication 8, **caractérisée en ce que** le sel de potassium est un chlorure de potassium.

10. Composition fertilisante selon les revendications 1 à 9, **caractérisée en ce que** les sels doubles sont de phosphore, calcium, Fe et/ou phosphore, calcium, Zn.

11. Composition fertilisante selon les revendications 1 à 9, **caractérisée en ce qu'**elle contient deux sels doubles. Une de phosphore, magnésium et Fe; et une autre de phosphore, magnésium et Zn.

12. Composition fertilisante selon les revendications précédentes, **caractérisée en ce qu'**elle est présentée sous forme d'une poudre, de granulés, de pastille ou compacte.

13. Méthode pour fertiliser sols qui permet de rendre une nutrition adéquate des cultures compatible avec la réduction maximale des pertes de fertilisants, comprenant l'application sur le sol d'une composition selon les revendications 1 à 12.
